# FASCICULE DE BREVET EUROPEEN

(11) **EP 0 439 972 B1**
(45) Date de publication et mention de la délivrance du brevet: **15.09.1993**
(21) Numéro de dépôt: 90403448.5
(22) Date de dépôt: 05.12.1990
(51) Int. Cl.: B29C 33/00

(54) **Noyau de moule**
Formkern
Mould core

(30) Priorité: 06.12.1989 FR 8916096
(43) Date de publication de la demande: 07.08.1991
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Jourdain, Gérard Ernest André, F-91250 Saintry Sur Seine (FR); Raynal, Régis, NL-2200 AG Noordwijk (NL)
(74) Mandataire: Moinat, François

(56) Documents cités:
- WO-A-88/01932
- DE-A- 2 652 862
- DE-U- 1 980 964
- GB-A- 717 802
- US-A- 3 148 414

## Description

L'origine de l'invention est la recherche d'une solution à la fabrication de pièces présentant un axe de révolution, réalisées en résines polymérisées, par moulage, sans dépouilles de démoulage qui seraient inacceptables pour des pièces de grande précision, au demeurant souvent également de grandes dimensions.

On connaît déjà des dispositions permettant de résoudre ce problème de fabrication: FR-A-2 613 662 propose notamment un outillage de moulage d'une pièce à mouler, devant être traitée à chaud, ledit outillage comprenant une matrice délimitée par une paroi de matrice possédant un premier coefficient de dilatation thermique, et comprenant également un poinçon susceptible de coopérer avec ladite matrice et délimité par une paroi de poinçon possédant un deuxième coefficient de dilatation thermique supérieur audit premier coefficient de dilatation thermique, l'opération de moulage comprenant notamment, successivement, la pénétration, à une première température, du poinçon à l'intérieur de la matrice, puis le chauffage de la matrice et du poinçon à une deuxième température supérieure à ladite première température, et enfin le refroidissement ultérieur de la matrice et du poinçon.

Cet outillage connu reste cependant à la fois compliqué et coûteux.

L'outillage antérieur est compliqué, car le poinçon est constitué par des éléments dilatables, entourés par une sorte d'enveloppe, également extensible, qui forme l'organe de moulage dudit poinçon. La réalisation de l'ensemble n'est pas aisée et la précision de moulage obtenue n'est pas toujours suffisante.

Cet outillage est également coûteux, non seulement en raison de la présence de cette enveloppe, mais aussi en raison de l'usure rapide qui se produit et qui rend nécessaire le remplacement fréquent d'éléments coûteux.

L'invention entend remédier à ces inconvénients, d'une part, en simplifiant la constitution du poinçon de moulage, en supprimant ladite enveloppe, d'autre part, en prévoyant les dispositions constructives permettant la réutilisation, après réusinage, d'éléments de poinçon ayant subi une première usure.

Selon l'invention, le poinçon est donc constitué par une pluralité de secteurs distincts, qui sont montés pivotant sur un support commun, chacun autour d'un axe de pivotement, les dimensions circonférentielles des divers secteurs, à ladite deuxième température, étant telles que les faces radiales de ces secteurs se succèdent de manière jointive et constituent la face de moulage de ladite paroi de poinçon.

De manière préférée, le support comporte plusieurs logements susceptibles de recevoir l'axe de pivotement, cependant que chaque secteur a sa face radiale susceptible, après une première usure, de subir un réusinage, de manière que, après insertion de l'axe de pivotement dans un desdits logements autre que le premier logement utilisé avant ledit réusinage, la face circonférentielle dudit secteur, à ladite deuxième température a une forme identique à celle qu'avait le même secteur avant ledit réusinage et ladite première usure, et avec insertion de l'axe de pivotement dans ledit premier logement.

L'invention sera mieux comprise, et des caractéristiques secondaires et leurs avantages apparaîtront au cours de la description d'une réalisation donnée ci-dessous à titre d'exemple.

Il est entendu que la description et les dessins ne sont donnés qu'à titre indicatif et non limitatif.

Il sera fait référence aux dessins annexés, dans lesquels:
- la figure 1 représente deux configurations d'utilisation d'un outillage neuf conforme à l'invention;
- la figure 2 permet de repérer les dimensions d'un secteur constitutif du poinçon; et,
- la figure 3 représente deux configurations analogues à celles de la figure 1, du même poinçon, mais réutilisé après une usure et un réusinage.

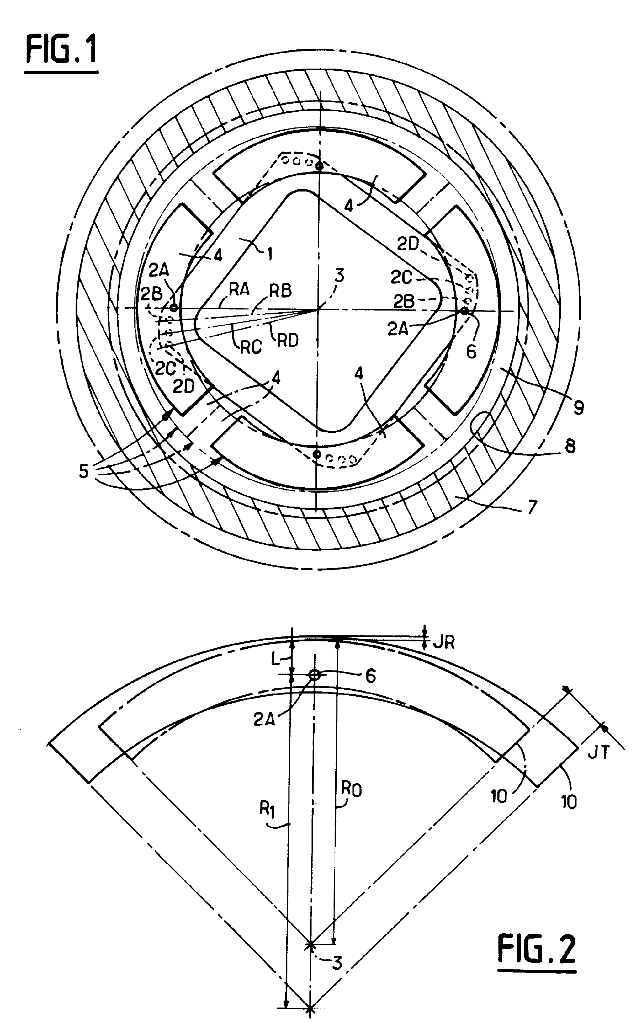

Le moule représenté sur la figure 1 comprend:
- un support 1, dont la section droite a une forme générale carrée, muni dans la zone de chacun des angles d'une série de quatre logements 2A, 2B, 2C et 2D, de réception d'un axe de pivotement, logements disposés à des distances RA, RB, RC et RD croissantes de l'axe 3 du support 1;
- quatre secteurs identiques 4, qui présentent chacun une face externe cylindrique 5, à génératrices parallèles à l'axe 3, chaque secteur étant monté pivotant sur le support 1 autour d'un axe de pivotement 6 parallèle à l'axe 3 et introduit à la fois dans un logement du secteur et dans l'un des logements 2A à 2D du support, ici, dans la figure 1, dans le logement 2A;
- une matrice 7, qui présente une paroi interne cylindrique 8, d'axe 3.

L'ensemble du support 1 et des quatre secteurs 4 forme le poinçon du moule, l'espace 9 entre la matrice 7 et ledit poinçon correspondant au volume de la pièce à mouler.

Sur la figure 1, en traits continus, le moule est représenté à une température initiale T0, alors que les traits interrompus représentent la position à la température finale T1, supérieure à T0. L'ensemble du moule - poinçon et matrice - est porté de la température T0 à la température T1, et est ramené ultérieurement à la température T0, par exemple au moyen de résistances électriques contenues dans la matrice 7 et dans les secteurs 4.

De plus, les coefficients de dilatation thermique A4 et A7 des secteurs 4 et de la matrice 7 sont différents, celui A4 des secteurs étant supérieur à celui A7 de la matrice.

Enfin, il convient d'observer que si, à la température initiale T0, chaque secteur 4 est séparé de celui qui le précède et de celui qui le suit, il n'en est plus de même à la température finale T1, à laquelle les divers secteurs 4 sont jointifs et constituent la paroi continue du poinçon, délimitée par l'ensemble de leurs faces externes 5. Le matériau de la pièce réalisée par moulage, qui occupera l'espace 9, a un coefficient de dilatation du même ordre de grandeur qu'A7 et que celui du support 1.

La figure 2 représente un secteur 4 aux deux températures précitées.

Avec les repères suivants:
L = distance entre l'axe du logement 2A et la face 5, du secteur 4, à la température T0, mesurée suivant un rayon passant par l'axe 3;
R0 = distance radiale entre l'axe 3 et ladite face 5;
R1 = distance radiale entre l'axe du logement 2A et la position de l'axe 3 à la température T1;
JR = déplacement radial de la face 5 suivant le rayon passant par l'axe du logement 2A, au cours de la dilatation du secteur 4 entre les températures T0 et T1;
JT = déplacement tangentiel d'une extrémité 10 du secteur 4, au cours de la dilatation du secteur entre les températures T0 et T1;
DT = T1 - T0;
PI = 3,14159;
N = le nombre de secteurs (ici, quatre);

les valeurs de JR et JT sont obtenues par les formules suivantes:
JR = L x A4 x DT
JT = (PI x R0 x A4 x DT) / N.

Bien entendu, le nombre de secteurs n'est pas limité à 4, et peut être différent (supérieur, ou inférieur à 4).

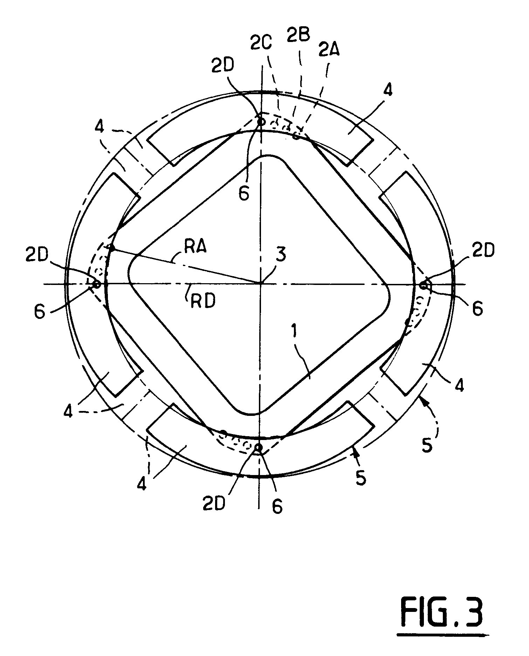

La figure 3 représente le même poinçon que la figure 1, mais après:
- usure de chaque secteur 4;
- réusinage de la face 5 de chaque secteur;
- insertion de l'axe 6 de pivotement de chaque secteur 4 dans le logement 2D du support 1.

Compte tenu de la différence des distances RA et RD, la nouvelle face 5 de chaque secteur 4 est disposée, à la température T0 sensiblement à l'emplacement de la face initiale 5 avant réusinage; et, à la température T1, l'ensemble des nouvelles faces 5 des secteurs coïncide exactement avec l'ensemble des faces initiales 5 avant réusinage. L'aptitude du poinçon au moulage a entièrement été restaurée par le réusinage et le choix des logements 2D au lieu de 2A. Bien entendu, ce résultat est également obtenu par les réusinages partiels et les choix intermédiaires d'insertion des axes de pivotement 6 dans les logements 2B et 2C.

Ainsi, avec les dispositions décrites il est possible, en choisissant les coefficients de dilatation A4 et A7:
- de réaliser, à la température T1, une face externe 5 continue, uniquement avec les secteurs 4 eux-mêmes, sans interposition d'enveloppe intermédiaire;
- de réutiliser plusieurs fois après usures, et réusinages partiels, les mêmes secteurs 4, qui constituent des éléments coûteux, qu'il y a évidemment intérêt à pouvoir utiliser le plus longtemps possible.

Dans le cas de pièces à mouler, dites axisymétriques, notamment cylindriques, les différences de valeurs entre A4 et A7 permettent des moulages très précis, car ne nécessitant aucune dépouille.

A noter que l'élévation de température de T0 à T1 à la fois de la matrice 7 et des secteurs 4 permet une polymérisation homogène à chaud des résines composites avec lesquelles sont réalisées les pièces à mouler.

L'outillage décrit n'a cependant pas son utilisation limitée au moulage de pièces en résines polymérisables à chaud. Tout moulage à chaud sans dépouille peut être obtenu avec ledit outillage.

## Revendications

1. Outillage de moulage d'une pièce à mouler, devant être traitée à chaud, ledit outillage comprenant une matrice (7) délimitée par une paroi (8) de matrice possédant un premier coefficient de dilatation thermique (A7), et comprenant également un poinçon (4) susceptible de coopérer avec ladite matrice et délimité par une paroi de poinçon (5) possédant un deuxième coefficient de dilatation thermique (A4) supérieur audit premier coefficient de dilatation thermique, l'opération de moulage comprenant notamment, successivement, la pénétration, à une première température (T0), du poinçon à l'intérieur de la matrice, puis le chauffage de la matrice et du poinçon à une deuxième température (T1) supérieure à ladite première température, et enfin le refroidissement ultérieur de la matrice et du poinçon,
caractérisé en ce que le poinçon est constitué par une pluralité de secteurs distincts (4), qui sont montés pivotant sur un support commun (1), chacun autour d'un axe de pivotement (6), les dimensions circonférentielles des divers secteurs, à ladite deuxième température (T1), étant telles que les faces radiales (5) de ces secteurs se succèdent de manière jointive et constituent la face de moulage de ladite paroi de poinçon.

2. Outillage de moulage selon la revendication 1, caractérisé en ce que le support (1) comporte plusieurs logements (2A, 2B, 2C, 2D) susceptibles de recevoir l'axe de pivotement (6), cependant que chaque secteur (4) a sa face radiale (5) susceptible, après une première usure, de subir un réusinage, de manière que, après insertion de l'axe de pivotement (6) dans un (2D) desdits logements autre que le premier logement (2A) utilisé avant ledit réusinage, la face circonférentielle (5) dudit secteur, à ladite deuxième température (T1) a une forme identique à celle qu'avait le même secteur avant ledit réusinage et ladite première usure, et avec insertion de l'axe de pivotement (6) dans ledit premier logement (2A).

## Patentansprüche

1. Formwerkzeug für ein einer Wärmebehandlung zu unterziehendes Gußteil mit einer Matrize (7), die von einer Matrizenwandung (8) begrenzt ist, die einen ersten Wärmeausdehnungskoeffizienten (A7) besitzt, sowie mit einem Stempel (4), der mit der Matrize zusammenwirken kann und von einer Stempelwandung (5) begrenzt ist, die einen zweiten Wärmeausdehnungskoeffizienten (A4) besitzt, der größer ist als der erste Wärmeausdehnungskoeffizient (A7), wobei der Gießvorgang aufeinanderfolgend namentlich das Eindringen des Stempels in die Matrize bei einer ersten Temperatur (T0), dann das Erwärmen der Matrize und des Stempels auf eine zweite Temperatur (T1), die höher ist als die erste Temperatur, und schließlich das spätere Abkühlen der Matrize und des Stempels umfaßt,
**dadurch gekennzeichnet,**
daß der Stempel aus einer Mehrzahl von getrennten Sektoren (4) besteht, die, jeder um eine eigene Schwenkachse (6) drehbar, auf einem gemeinsamen Träger (1) montiert sind, wobei die verschiedenen Sektoren bei der genannten zweiten Temperatur (T1) solche Umfangsabmessungen haben, daß die radialen Seiten (5) der Sektoren angrenzend aufeinanderfolgen und die Formfläche der Stempelwandung bilden.

2. Formwerkzeug nach Anspruch 1, **dadurch gekennzeichnet**, daß der Träger (1) mehrere Aufnahmen (2A, 2B, 2C, 2D) für die Lagerung der Schwenkachse (6) aufweist, und daß die radiale Seite (5) jedes Sektors (4) nach einem ersten Verschleiß einer solchen Nachbearbeitung unterzogen werden kann, daß die Umfangsseite (5) des genannten Sektors nach dem Einsetzen der Schwenkachse (6) in eine (2D) der genannten Aufnahmen, die eine andere ist als die vor der Nachbearbeitung benutzte erste Aufnahme (2A), bei der genannten zweiten Temperatur (T1) eine Form besitzt, die mit der Form identisch ist, die derselbe Sektor vor der Nachbearbeitung und vor dem ersten Verschleiß und mit dem Einsetzen der Schwenkachse in die erste Aufnahme (2A) besaß.

## Claims

1. Tool for moulding a part to be moulded, which part is to be processed hot, the said tool comprising a mould cavity (7) defined by a mould-cavity wall (8) possessing a first thermal-expansion coefficient (A7), and also comprising a force plug (4) capable of interacting with the said mould cavity and defined by a force-plug wall (5) possessing a second thermal-expansion coefficient (A4) greater than the said first thermal-expansion coefficient, the moulding operation comprising especially, in succession, the penetration, at a first temperature (T0), of the force plug into the mould cavity, then the heating of the mould cavity and of the force plug to a second temperature (T1) greater than the said first temperature and, finally, the subsequent cooling of the mould cavity and of the force plug,
characterised in that the force plug is constituted by a plurality of separate sectors (4) which are each mounted so as to pivot, on a common support (1), about a pivot pin (6), the circumferential dimensions of the various sectors, at the said second temperature (T1), being such that the radial faces (5) of these sectors follow each other in a contiguous manner and constitute the moulding face of the said force-plug wall.

2. Mould tool according to Claim 1, characterised in that the support (1) includes a plurality of housings (2A, 2B, 2C, 2D) capable of receiving the pivot pin (6), whereas the radial face (5) of each sector (4) is capable, after a first wearing, of undergoing a remachining operation, so that, after insertion of the pivot pin (6) into one (2D) of the said housings other than the first housing (2A) used before the said remachining operation, the circumferential face (5) of the said sector, at the said second temperature (T1), has a shape identical to that which the same sector had before the said remachining operation and the said first wearing, and with insertion of the pivot pin (6) into the said first housing (2A).
